# FASCICULE DE BREVET EUROPEEN

(11) **EP 3 858 105 B1**
(45) Date de publication et mention de la délivrance du brevet: **28.12.2022**
(21) Numéro de dépôt: 19782647.2
(22) Date de dépôt: 17.09.2019
(51) Int. Cl.: H05B 3/34, H02J 5/00, H01F 38/14

(54) **SYSTÈME MULTIFONCTION DE BANDES ÉLECTRIQUES MODULAIRES ET UNIVERSELLES**
MULTIFUNKTIONALES SYSTEM VON MODULAREN UND UNIVERSALEN ELEKTRISCHEN BÄNDERN
MULTIFUNCTION SYSTEM OF UNIVERSAL AND MODULAR ELECTRICAL BANDS

(30) Priorité: 24.09.2018 FR 1800990
(43) Date de publication de la demande: 04.08.2021
(73) Titulaire: Smart Packaging Solutions, 13790 Rousset (FR)
(72) Inventeur: CUENOT, Yves-Pierre, 13790 ROUSSET (FR); TONIN, Jérôme, 13790 ROUSSET (FR); KAMBOURIAN, Haig, 13790 ROUSSET (FR)
(74) Mandataire: Nicolle, Olivier
(86) Numéro de dépôt international: PCT/FR2019/000147
(87) Numéro de publication internationale: WO 2020/065143

(56) Documents cités:
- EP-A1- 3 209 092
- US-A1- 2010 219 693
- US-B2- 8 174 152

## Description

La présente invention concerne un ensemble de bandes électriques modulaires destinées à être associées à des composants de commande pour former un système modulaire présentant plusieurs fonctions, notamment une fonction de chauffage par effet Joule, une fonction de transmission d'énergie et de données par un canal électromagnétique, et une fonction de capteur pour assurer la détection de présence de certains composants dans le système.

Le système selon l'invention est particulièrement adapté pour un usage dans les bâtiments, mais il peut aisément être adapté à d'autres domaines d'application, tels que les véhicules de transport, les vêtements ou autres.

### ETAT DE LA TECHNIQUE

La première application visée par l'invention est celle du chauffage des pièces d'un bâtiment. L'invention sera donc principalement décrite dans le cadre de cette application, sans pour autant limiter la généralité de l'invention.

Dans le domaine du bâtiment, on connait les solutions classiques de chauffage à base de radiateurs, électriques ou non.

Les radiateurs utilisant une résistance électrique sont connus pour leur faible confort d'utilisation, car du fait de leur absence d'inertie thermique, ils génèrent de fortes disparités locales de température. En outre ils sont alimentés en moyenne tension (220 Volts en Europe) et ne sont jamais totalement exempts d'un risque d'électrocution ou d'incendie en cas de défaut d'isolation.

On connait aussi les systèmes de chauffage par le sol, dans lesquels une source chauffante est directement intégrée au sol d'une pièce. Cela permet d'obtenir un niveau de confort thermique supérieur à celui des sources radiantes ponctuelles, mais au prix d'autres inconvénients. Ainsi, les systèmes de chauffage au sol par circulation dans la dalle d'un fluide caloporteur impliquent la pose d'un réseau de tuyaux qui à long terme présentent un risque de fuite ou de bouchage, ce qui entraine des travaux de maintenance élevés. En outre, la localisation des tuyaux dans la chape étant à postériori inconnue, tout poinçonnement ou perçage dans le sol pour installer un équipement est proscrit.

Pour remédier à certains de ces inconvénients, le document EP 3 209 092 A1 (Gerflor) a proposé une structure multicouche pour la réalisation d'un revêtement de sol ou de mur chauffant, qui intègre des bandes flexibles pourvues d'électrodes longitudinales entre lesquelles sont réparties des particules électriquement conductrices qui s'échauffent par effet Joule lorsqu'un courant électrique circule entre les électrodes d'une bande.

Ce dispositif permet après la pose du revêtement de percer localement le plancher chauffant sans affecter le fonctionnement du système de chauffage dans les zones non percées. Mais la structure proposée est limitée au chauffage d'un sol ou d'un mur, et ne permet pas de faire face à de nouveaux besoins domotiques à l'intérieur des bâtiments, comme l'alimentation localisée et flexible d'équipements électriques disposés dans une pièce.

On connaît par ailleurs un document US 2010/219693 A1 qui décrit un système d'alimentation électrique par voie inductive destiné à des locaux humides. Des prises électriques étanches sont alimentées en énergie électrique et couplées par voie inductive à des circuits secondaires qui alimentent des dispositifs électriques constituant des charges. De cette façon, les circuits secondaires n'ont pas de liaison galvanique avec la tension d'alimentation, ce qui minimise les risques d'électrocution. En outre, les enroulements primaires sont déconnectés de leur alimentation électrique lorsque aucun circuit secondaire n'est détecté.

Cependant le système selon ce document est entièrement analogique, dans la mesure où les charges des appareils connectés au secondaire ne sont pas identifiées ou identifiables, mais détectées par des détecteurs de présence analogiques. Lorsqu'un appareil est détecté, il est alimenté par une tension alternative, qui peut éventuellement être redressée en tension continue par l'appareil si celui-ci utilise une tension continue. Cette disposition n'offre pas un bon rendement énergétique, et ne permet pas d'alimenter de façon spécifique des antennes destinées au chauffage (qui devraient recevoir une tension ayant une composante continue), et des antennes destinées au transfert d'énergie par couplage inductif vers des appareils destinés à la communication d'informations, qui devraient recevoir des signaux alternatifs.

Le document US 8 174 152 B2 décrit une surface de sol dans laquelle sont tissés des conducteurs électriques à des fins de chauffage d'une pièce.

### BUT DE L'INVENTION

L'un des buts de l'invention est donc de remédier aux inconvénients précités en proposant une structure multifonction résistante au poinçonnement, notamment pour la réalisation d'un revêtement des sols ou des murs d'un bâtiment, (ou d'autres supports tels que les cloisons ou parois d'un navire ou autre véhicule de transport), et dont la pose, la réparation et la rénovation sont aisées.

Un autre but spécifique de l'invention est de proposer un dispositif qui non seulement présente de bonnes caractéristiques en matière de chauffage (bon rendement de chauffage, chauffage réparti de manière homogène sur le dispositif, peu coûteux à mettre en oeuvre, perçage et découpage facilités), mais qui en outre permette à l'aide du même dispositif de remplir des fonctions supplémentaires, telles que la génération localisée d'un champ électromagnétique permettant d'échanger des données avec d'autres dispositifs par voie radiofréquence.

Un autre but de l'invention est de proposer un système permettant l'intégration aisée et la détection de capteurs, en particulier des capteurs de présence pour la détection de présence et l'identification d'équipements utilisés dans une pièce, comme des interrupteurs, des dispositifs d'éclairage ou d'autres équipements électriques.

Un autre but spécifique de l'invention est de proposer un dispositif permettant, en plus des fonctions de chauffage et d'échange de données par voie radiofréquence, l'alimentation électrique d'équipements tels que des lampes, des appliques murales, ou d'autres dispositifs domotiques, par induction électromagnétique, sans avoir à tirer des câbles d'alimentation électrique.

### OBJET DE L'INVENTION

Dans son principe, la solution selon l'invention consiste à proposer des bandes ou plaques composées d'un support diélectrique souple et fin sur lequel sont réalisés des circuits conducteurs (simple ou double face), agencés de manière à présenter une résistance électrique permettant de générer un phénomène de chauffage par effet Joule lorsqu'ils sont parcourus par un courant électrique.

Selon l'invention, ces circuits électriques sont en outre conformés sous forme d'antennes présentant une inductance permettant de générer un champ électromagnétique radiofréquence lorsqu'ils sont parcourus par un courant alternatif, ce champ électromagnétique pouvant être utilisé à la fois pour échanger des données avec des dispositifs de commande (notamment des interrupteurs) ou des appareils, et pour fournir de l'énergie électrique par induction électromagnétique à d'autres appareils électriques externes, tels que notamment des lampes ou d'autres équipements électriques.

Enfin, les circuits électriques sont conformés pour présenter une capacité permettant une détection locale par effet capacitif, notamment pour la détection de présence d'équipements électriques.

Les différents circuits disposés sur les bandes ou plaques sont connectés à des organes d'adressage et de commande permettant de commander le fonctionnement de chaque circuit individuellement ou collectivement.

Avantageusement, afin d'assurer un coût de réalisation industrielle très faible, les circuits électriques sont réalisés sur des lés, qui peuvent être simplement posés sur un mur ou sur une paroi, comme on poserait un papier peint.

A cet effet, l'invention a pour objet un système multifonction de chauffage d'un support et de transfert d'énergie ou de données entre d'une part une pluralité d'antennes primaires situées sur ledit support et pilotées par une unité de commande susceptible de les alimenter en énergie électrique ou en données numériques, et d'autre part un ensemble d'appareils électriques aptes à être alimentés en énergie électrique ou en données par couplage inductif entre les antennes primaires et des antennes secondaires connectées aux appareils électriques, caractérisé en ce que chaque appareil électrique est associé à un identifiant numérique unique représentatif de son identité et d'un type d'appareil, et en ce que l'unité de commande est configurée d'une part pour alimenter les antennes primaires avec une tension électrique apte à provoquer leur échauffement par effet Joule, et d'autre part pour détecter et alimenter un appareil électrique donné avec une tension électrique spécifique correspondant à un transfert d'énergie ou de données à cet appareil en fonction de son identifiant numérique.

Selon un mode de réalisation avantageux, les antennes primaires possèdent une adresse ou une identification unique dans l'unité de commande de sorte que l'unité de commande peut les alimenter individuellement et sélectivement avec une tension électrique correspondant à un chauffage par effet Joule, à un transfert d'énergie électrique par induction ou à un échange de données numériques avec un appareil électrique.

Selon l'invention, le système comporte une pluralité d'organes de commande ou interrupteurs identifiés dans le système par un numéro individuel, de façon que l'identifiant unique de chaque appareil électrique puisse être logiquement associé avec le numéro individuel d'au moins un organe de commande susceptible de commander la mise en service ou hors service dudit appareil électrique et avec l'adresse ou l'identification d'au moins une antenne primaire du système.

Selon un mode de réalisation, l'identifiant numérique de chaque appareil électrique et le numéro individuel de chaque organe de commande sont mémorisés dans la mémoire d'une étiquette électronique RFID fixée sur chaque appareil électrique et sur chaque organe de commande.

Selon un mode de réalisation, l'unité de commande est configurée pour envoyer une tension continue aux antennes primaires destinées à produire un effet de chauffage, et une tension ayant une composante continue et une composante alternative aux antennes primaires destinées à produire à la fois un effet de chauffage et un effet d'alimentation en énergie ou de communication par induction électromagnétique avec un appareil.

Selon l'invention, l'unité de commande est configurée pour détecter une variation de charge aux bornes d'une antenne primaire lorsqu'un appareil électrique est mis en service ou hors service dans le système au voisinage de ladite antenne primaire. Cela permet une gestion dynamique et en temps réel du système multifonction.

Selon un mode de réalisation, l'unité de commande est configurée pour détecter une variation de charge aux bornes d'une première antenne primaire numéro i et d'une seconde antenne primaire numéro j lorsqu'un appareil électrique est déplacé de l'antenne primaire numéro i vers l'antenne primaire numéro j.

Dans ce cas, l'unité de commande peut être configurée pour couper l'alimentation de la première antenne primaire numéro i et pour alimenter la seconde antenne primaire numéro j, par actionnement du même organe de commande que celui qui alimentait la première antenne primaire numéro i.

Selon un mode de réalisation avantageux du système, l'antenne de l'appareil à alimenter et les antennes du dispositif sont configurées de manière que l'antenne de l'appareil à alimenter embrasse le flux électromagnétique d'au moins une antenne du dispositif, quelle que soit la position de l'appareil sur le dispositif. Cela permet de pouvoir poser l'appareil à alimenter à un endroit quelconque du système, tout en étant assuré qu'il captera un flux électromagnétique suffisant pour l'alimenter ou pour échanger des données avec lui.

Selon un mode de réalisation, les organes de commande sont des interrupteurs, qui peuvent être fixes ou mobiles. Dans ce dernier cas, ils pourront être déplacés à loisir, par exemple sur un mur, tout en continuant à commander l'appareil prévu avec lequel ils sont appariés.

Selon un mode de réalisation, le système multifonction comporte une interface de communication avec l'extérieur, configurée pour permettre la surveillance et le pilotage du système à partir d'un objet portable communicant, en particulier un téléphone portable ou une tablette électronique.

De façon avantageuse, l'unité de commande comporte un microprogramme configuré pour exécuter une procédure d'association logique entre un interrupteur donné et un appareil électrique donné, comportant des étapes consistant à:
- pour un utilisateur, poser un interrupteur libre, préalablement identifié par un numéro d'identification individuel, sur une antenne primaire numéro i ;
- actionner l'interrupteur de manière à activer l'étiquette RFID associée contenant l'identifiant individuel et détecter l'identifiant individuel de l'interrupteur ;
- pour le microprogramme de l'unité de commande, enregistrer l'identifiant individuel de l'interrupteur dans une mémoire de l'unité de commande contenant une liste des interrupteurs utilisés dans le système ;
- envoyer à l'aide du microprogramme un signal de détection de charge à chaque antenne primaire et enregistrer la valeur de la tension mesurée aux bornes de chaque antenne primaire ;
- pour l'utilisateur, poser un appareil connecté à une antenne secondaire, sur une autre antenne primaire donnée, notée antenne numéro k;
- pour le microprogramme de l'unité de commande, détecter la variation de charge aux bornes de l'antenne primaire numéro k due à la présence de l'appareil électrique et de l'antenne secondaire ;
- pour le microprogramme de l'unité de commande, associer logiquement l'organe de commande et l'appareil électrique, ce qui revient à associer en mémoire l'identifiant individuel de l'interrupteur, le numéro i de l'antenne primaire couplée à l'interrupteur, le numéro k de l'antenne dans laquelle a été détectée la variation de charge due à l'appareil, et l'identifiant unique de l'appareil électrique.

Cette procédure d'association permet de déplacer librement les organes de commande ou les appareils sur la surface du système tout en s'assurant qu'un organe de commande donné commandera toujours l'appareil avec lequel il est apparié, quelles que soient leurs positions dans le système.

Selon un mode de réalisation pratique, les antennes primaires sont disposées sur des lés destinés à la réalisation d'un revêtement d'un support tel qu'un sol, mur, ou équivalent, chaque lé comprenant une couche diélectrique revêtue de circuits électriques formant des antennes primaires comportant une pluralité de spires métalliques conformées pour générer, simultanément ou sélectivement, lorsqu'elles sont parcourues par un courant électrique, un effet de chauffage par effet Joule et un effet électromagnétique apte à permettre un échange de données ou d'énergie par couplage électromagnétique avec une antenne secondaire connectée à un appareil électrique. La couche diélectrique est par exemple en PET, en PVC, en polycarbonate ou en polyuréthane. Les antennes primaires comportent des pistes conductrices, par exemple en aluminium, cuivre, argent, ou encre conductrice.

De façon avantageuse, les spires des antennes primaires ont une forme polygonale, hexagonale ou circulaire.

### DESCRIPTION DETAILLEE

L'invention sera décrite plus en détail en référence aux figures ci-jointes dans lesquelles :
La figure 1 représente un organigramme fonctionnel du système selon l'invention ;
La figure 2 représente de façon schématique le principe de l'invention consistant à intégrer plusieurs fonctions électriques dans un même dispositif en bande, appelé « lé » ;
La figure 3 représente un exemple de dispositions de plusieurs bandes ou lés selon l'invention, juxtaposées sur un sol et un mur ;
La figure 4 représente le schéma électrique équivalent d'une partie du système selon l'invention ;
La figure 5 représente de façon schématique le principe de l'alimentation électrique et de la commande d'un équipement, par exemple un lampadaire, à l'aide du système selon l'invention ;
La figure 6 illustre l'utilisation du système selon l'invention dans le cadre de l'équipement d'une pièce d'un bâtiment.

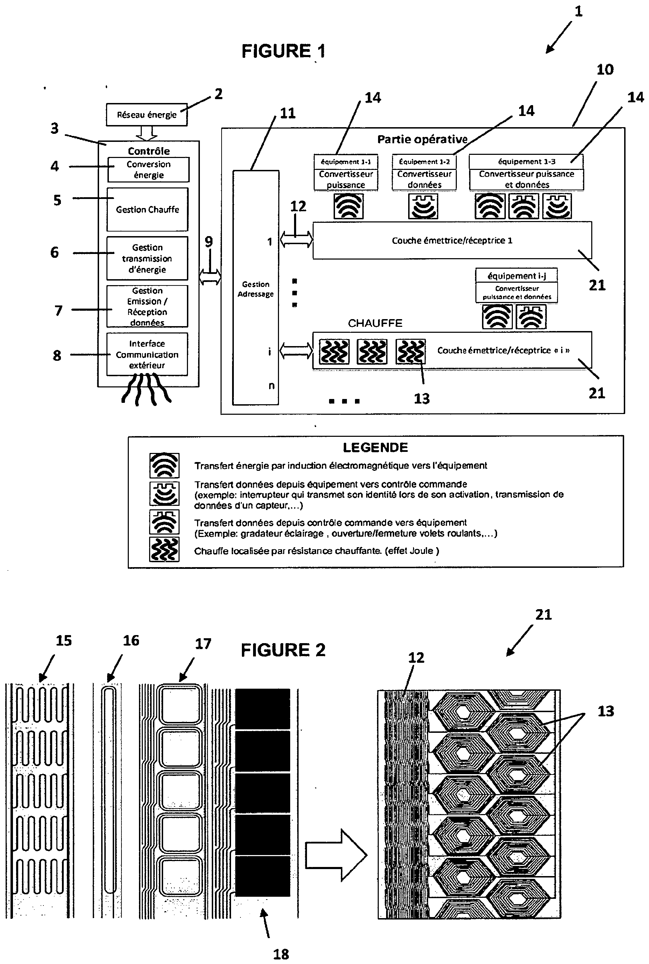

On se réfère à la figure 1 qui montre l'architecture d'ensemble du système 1 selon l'invention. Le système 1 comporte principalement un ensemble de circuits 13 qui seront détaillés plus loin et qui comportent des caractéristiques résistives pour générer un effet de chauffage par effet Joule lorsqu'ils sont alimentés, et des caractéristiques inductives et capacitives pour générer un effet inductif et un effet capacitif. Les circuits 13 sont répartis sur un ensemble de lés permettant de recouvrir plus facilement une surface de sol, de mur ou d'un autre support équivalent en fonction de l'application visée. Afin de pouvoir alimenter sélectivement tel ou tel circuit particulier sur un lé, les pistes des circuits 13 aboutissent à des bus 12 qui les connectent à une unité de commande 3 via une unité 11 de gestion d'adressage et un bus 9.

L'unité de commande 3 comporte plusieurs composantes, à savoir notamment un convertisseur d'énergie 4 qui reçoit en entrée le courant du réseau électrique, à savoir par exemple 220 Volts alternatifs à 50 Hz en Europe, et qui distribue en sortie une tension d'alimentation de sécurité, par exemple 12 volts, qui permet d'alimenter les autres composantes de l'unité de commande 3, à savoir une unité 5 de gestion du chauffage, une unité 6 de gestion et de transmission d'énergie électrique par induction, une unité 7 d'émission/réception de données, et une interface 8 de communication du système avec son environnement externe, par exemple à des fins de programmation ou de télécommande.

En figure 2 on a représenté le principe de constitution des lés portant les circuits 13 présents sur les lés 21.

A gauche de la figure 2 on a représenté des circuits 15, 16, 17, 18 correspondant à des fonctionnalités distinctes et dissociées, comme cela existe dans l'état de la technique. Un circuit résistif 15 est constitué par des résistances en parallèle qui comme cela est utilisé dans les radiateurs électriques, permettent de dissiper par effet Joule une puissance thermique proportionnelle, au rendement de conversion près, à la résistance électrique et au carré de l'intensité du courant. Un circuit inductif 16 comporte une bobine permettant de transférer, comme connu en soi, une énergie électrique par induction. Un ensemble de bobines 17 dimensionnées de façon appropriée permettent, lorsqu'elles sont alimentées par un courant alternatif et placées en face de bobines réceptrices (non représentées), d'échanger des données avec ces bobines. Un ensemble de capacités 18 permettent de détecter par effet capacitif un circuit électrique ou un objet placé en regard de l'une des capacités.

Tous ces circuits pris individuellement sont bien connus dans l'état de la technique.

Comme représenté en partie droite de la figure 2, le principe de l'invention consiste à concevoir des circuits 13 d'antennes primaires combinant des caractéristiques électriques de résistance, d'inductance et de capacité choisies pour pouvoir réaliser simultanément plusieurs effets, à savoir deux ou plus d'effets pris parmi :
- un effet de chauffage par effet Joule, ayant des performances suffisantes pour chauffer un support tel qu'un sol ou un mur ;
- un effet inductif suffisant pour transférer suffisamment d'énergie électrique par induction pour pouvoir alimenter des dispositifs électriques tels que des lampes, ou d'autres équipements domotiques ;
- un effet de transmission de données par induction électromagnétique;
- Un effet capacitif apte à détecter la présence d'une charge ou d'un circuit tel qu'un interrupteur.

A cet effet, on intègre de façon avantageuse une pluralité de circuits 13 juxtaposés sur un même dispositif en bande, ou « lé ».

On a constaté que des circuits 13 en forme de bobines hexagonales permettent de couvrir de façon optimale une surface de lé. Les pistes d'alimentation des différentes bobines 13 sont ramenées en un bus 12 qui connecte chaque lé à l'unité 11 de gestion des adresses.

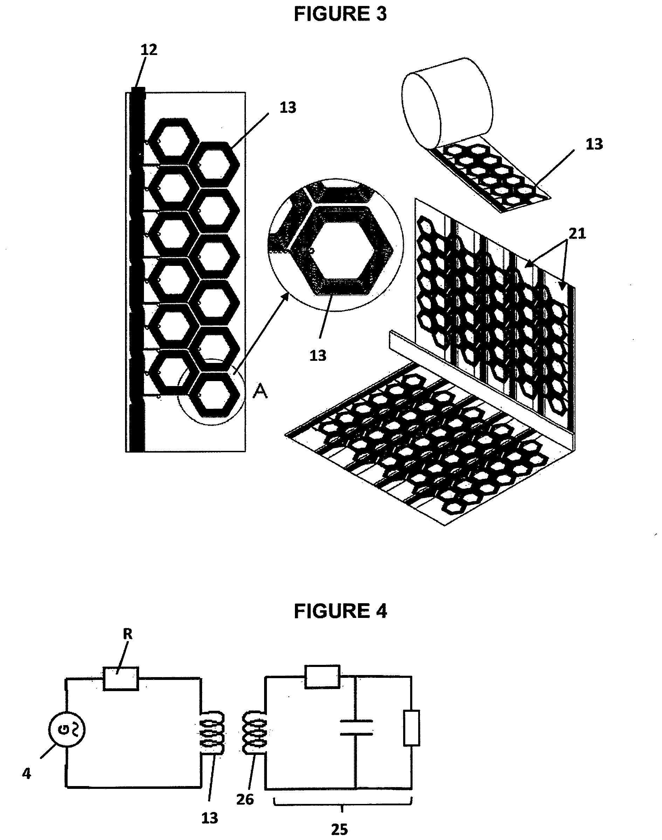

En figure 3 est représenté le détail d'un lé 21 comportant plusieurs circuits 13 en forme d'antennes hexagonales, ainsi qu'une vue agrandie d'un circuit 13. La figure montre en outre un rouleau portant des antennes primaires 13 et permettant de découper des lés de la longueur requise, et un exemple d'agencement de lés sur une surface horizontale comme un sol, et sur une surface verticale comme le mur d'un bâtiment.

Selon un mode de réalisation avantageux, les caractéristiques des lés sont les suivantes : ils sont réalisés à partir d'un rouleau en matière plastique flexible faisant office de diélectrique, par exemple en PET, PVC, polycarbonate, polyuréthane ou équivalent, ayant une épaisseur de 10 à 50 µm et une largeur de 100 à 600 mm.

Afin de pouvoir obtenir à l'aide d'un unique circuit 13 les différents effets mentionnés précédemment, la géométrie des circuits 13 n'est pas quelconque, mais optimisée pour réaliser le meilleur compromis entre les différents effets recherchés.

Les circuits 13 constituent des antennes primaires qui peuvent transférer par induction de l'énergie électrique et/ou des données à des antennes secondaires 26 connectées à des dispositifs 25 faisant office de charge, comme cela détaillé plus loin.

Les spires conductrices des circuits 13 sont disposées sur une face ou sur les deux faces de la couche diélectrique. Les spires des circuits 13 ont par exemple une épaisseur 10 à 30 µm, une largeur de 200 µm à 3 mm, et une distance inter-piste de 200µm à 3 mm. Les pistes conductrices sont par exemple en aluminium, en cuivre, en argent ou tout autre métal approprié, et elles sont obtenues par gravure chimique ou laser à partir d'une couche mince métallique. Elles peuvent également être en encre électriquement conductrice. Chaque antenne primaire 13 d'émission / réception comporte par exemple entre 2 et 20 spires, circulaires, polygonales, par exemple hexagonales, et de dimensions externes comprises par exemple entre 50 mm et 500 mm.

Avec ces dimensions, on obtient des antennes primaires ayant une résistance électrique de 1 à 10 ohms, et une inductance de 1 à 50 µH.

Ces caractéristiques permettent d'obtenir les performances suivantes :
En mode chauffage par effet Joule, on génère une puissance électrique allant jusqu'à 150 W/M² avec un rendement de 95 %.

En mode transfert d'énergie électrique par induction, on peut transférer jusqu'à 1000 W/M² avec un rendement de 70 % entre une bobine d'émission primaire 13 et une bobine de réception secondaire 26 (correspondant par exemple à une bobine placée sur un équipement 25 à alimenter, comme une lampe électrique).

En mode transfert de données, on peut transférer à l'aide d'un signal alternatif de fréquence comprise entre 50 à 500 kHz, des messages bidirectionnels ayant une taille de l'ordre du kilo-octet par seconde, suffisante pour envoyer des messages de commande à des dispositifs domotiques connectés au système selon l'invention.

En figure 4 on a représenté le schéma électrique équivalent correspondant à une antenne primaire 13 alimentant un appareil 25 via une antenne secondaire 26. La partie gauche de la figure 4 représente le convertisseur de tension 4 qui alimente une antenne primaire 13 à travers un circuit résistif R correspondant aux fils des bus 9, 12 (figure 1). La partie droite de la figure 4 correspond à la charge alimentée par l'antenne primaire 13, à savoir un appareil électrique 25.

Il est à noter que pour alimenter par induction un dispositif ou appareil électrique 25 à l'aide du système selon l'invention, il est utile que l'appareil en question, par exemple une lampe, soit pourvu à sa base d'une antenne de réception 26 ou antenne secondaire, couplée inductivement avec au moins une antenne primaire 13 du système. Bien entendu, la quantité d'énergie électrique transférée à l'appareil 25, ou la quantité de données échangées avec lui, dépendra de la qualité du couplage inductif entre l'antenne primaire 13 du système et l'antenne secondaire 26 de l'appareil.

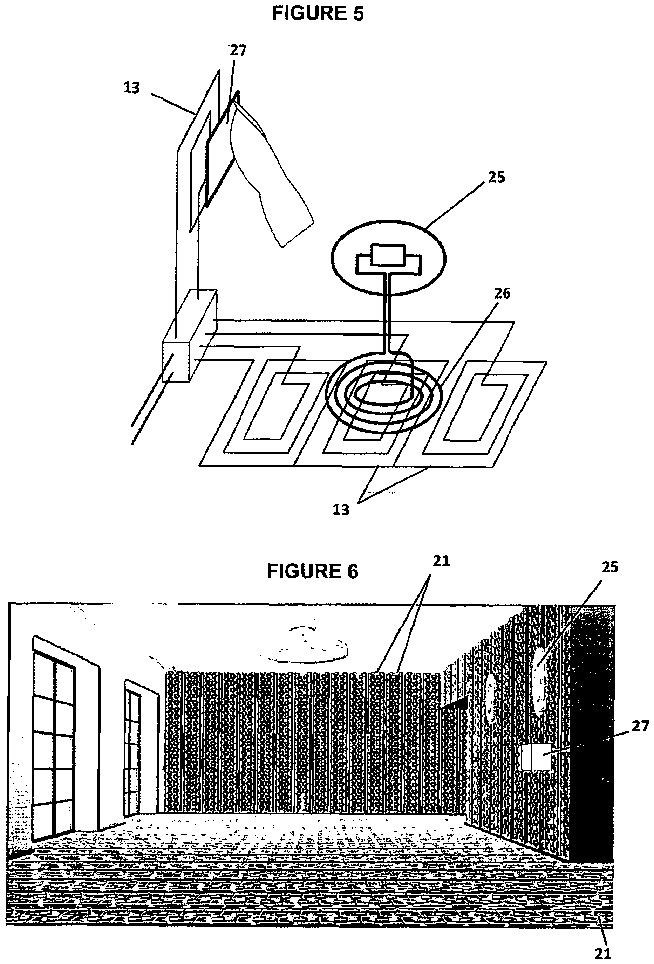

En particulier, comme représenté en figure 5, il est utile que l'antenne secondaire 26 de l'appareil 25 et les antennes primaires 13 du dispositif chauffant soient configurées de manière que l'antenne secondaire 26 de l'appareil à alimenter embrasse le flux électromagnétique d'au moins une antenne primaire 13 du dispositif, quelle que soit la position de l'appareil 25 sur le dispositif.

Pour cela, dans un mode de réalisation avantageux, la taille de l'antenne de réception 26 est supérieure à celle de l'antenne d'émission 13, par exemple 5 fois supérieure, ce qui garantira que, quelle que soit la position du dispositif 25 à alimenter sur une surface équipée d'antennes primaires 13, ce dispositif recevra via son antenne secondaire 26 l'énergie électrique de plusieurs antennes primaires 13 du système. Cela entraine également la conséquence avantageuse que l'on pourra faire fonctionner l'appareil 25, par exemple une lampe électrique, à n'importe quel point d'une pièce équipée d'antennes primaires 13, sans qu'une connexion filaire ne soit nécessaire, car la lampe sera toujours alimentée par au moins une antenne primaire 13 du système.

En ce qui concerne l'alimentation électrique des différents circuits 13 d'un lé, plusieurs solutions sont théoriquement possibles, par exemple la commande individuelle, par un ou plusieurs interrupteurs dédiés à une antenne primaire 13 ou à un ensemble d'antennes primaires 13 connectées en parallèle. Mais cette méthode deviendrait très lourde à gérer lorsque le nombre d'antennes primaires 13 et le nombre d'appareils 25 à gérer augmente. Il vaut mieux dans ce cas donner à chaque appareil 25 et à chaque interrupteur 27 un identifiant numérique unique, et associer logiquement les identifiants de manière qu'un interrupteur 27 donné commande la mise en service ou hors service d'un ou de plusieurs appareils 25 préalablement identifiés, via une ou plusieurs antennes primaires identifiées par un index ou une adresse. Cette gestion est effectuée à l'aide d'un microprogramme de l'unité de commande 3.

En figure 6 on a représenté une pièce d'un bâtiment dont l'intégralité des murs et du sol ont été recouverts avec des lés comprenant des circuits d'antennes primaires 13 décrits précédemment. Dans ce cas, n'importe quelle zone du sol ou des murs peut être utilisée pour chauffer la pièce, fournir localement de l'énergie électrique à un appareil 25 compatible, ou recevoir un dispositif de commande 27.

Par ailleurs, si des lés pourvus d'antennes primaires 13 sont également positionnés à la fois sur le sol et les murs d'une pièce, il peut être avantageux que les interrupteurs 27 soient des dispositifs à fonctionnement sans contact, capables d'être couplés par induction avec une antenne primaire 13 d'un lé mural pour ouvrir ou fermer le circuit d'alimentation électrique d'un ou de plusieurs autres circuits d'antenne primaire 13, de manière à commander localement une action de chauffage, de transmission d'énergie ou d'échange de données.

Selon une variante, les interrupteurs 27 peuvent même être des objets mobiles d'identification, intégrant une carte à puce sans contact mémorisant des réglages ou des positionnements d'interrupteurs personnalisés. De cette façon, un utilisateur donné aura accès à des réglages personnalisés et programmables, comme par exemple telle lampe allumée par défaut, et telle zone de surface au sol chauffée par défaut.

Selon un mode de réalisation de l'invention, l'unité de commande 3 du système comporte un microprocesseur et une mémoire. Le microprocesseur exécute un microprogramme configuré pour envoyer des signaux de mesure de charge aux différentes antennes primaires 13 du système, et pour mémoriser dans cette mémoire les résultats des mesures. Les différentes antennes primaires 13 du système ont une adresse unique dans le système, les appareils 25 ont un identifiant numérique unique, et leurs organes de commande 27 sont également assortis d'un identifiant individuel unique. Les étapes de fonctionnement du système, telles que mises en œuvre par l'unité de commande 3, sont détaillées ci-dessous.

Préalablement à l'utilisation du système selon l'invention, on effectue une opération d'initialisation, pour laquelle on commence par couper l'alimentation électrique du système et par le retrait de tous les appareils 25 qui constituent des charges électriques. Puis au démarrage du système, on envoie un signal de détection de charge aux bornes de toutes les antennes primaires 13 du système, afin de mesurer et de mémoriser la tension aux bornes de toutes les antennes 13 au démarrage du système, ce qui permettra ensuite de détecter les variations de charge aux bornes des antennes 13 en face desquelles on positionnera une charge, à savoir un appareil 25 pourvu d'une antenne secondaire 26 et mis en service par un organe de commande 27.

Lorsque le système a été initialisé et que les tensions aux bornes de toutes les antennes primaires 13 individuelles ont été mémorisées par l'unité de commande 3, on peut procéder à l'installation des appareils 25 en positionnant l'antenne secondaire 26 de chacun d'eux en face de telle ou telle antenne ou groupe d'antennes primaires 13. On positionne également les organes de commande 27 des appareils 25, qui possèdent un état fermé (par exemple un interrupteur fermé) et un état ouvert, en face d'une autre antenne primaire 13 du système. On peut alors procéder à l'association logique entre un appareil 25 donné, un (ou plusieurs) organe(s) de commande 27 (par exemple un interrupteur simple, deux interrupteurs va-et-vient, ...), et une ou plusieurs antennes primaires (13).

A cet effet, on effectue une procédure d'appairage ou plus généralement d'association logique, de la manière suivante :
- On pose un organe de commande 27 libre (par exemple un interrupteur pourvu d'une étiquette d'identification RFID appariée à aucune antenne primaire) sur une antenne primaire numéro i du système qui doit être ensuite commandée par ledit organe de commande.
- On actionne l'organe de commande 27, par exemple pour fermer le circuit de l'étiquette RFID, ce qui provoque une variation de charge de l'antenne primaire numéro i voisine de l'étiquette RFID. L'unité de commande 3 du système analyse la variation de charge et détecte qu'il s'agit d'une étiquette RFID, indiquant qu'un nouvel organe de commande 27 identifié par l'identifiant de son étiquette RFID doit être ajouté à la configuration mémorisée du système. A cet effet, l'unité de commande 3 lit et compare l'identifiant de l'étiquette RFID détectée aux identifiants déjà enregistrés en mémoire, et s'il s'agit d'un nouvel identifiant, elle l'enregistre en mémoire comme faisant maintenant partie du système.
- Le microprogramme commande l'envoi d'un signal de détection de charge à chaque antenne primaire 13 (signal de faible intensité) et enregistre la valeur de la tension mesurée aux bornes de chaque antenne primaire 13. De préférence, le système mesure en permanence la tension aux bornes de chaque antenne primaire 13.

- Pour associer logiquement le nouvel organe de commande 27 avec une antenne primaire 13 donnée (notée antenne primaire numéro i), on pose l'organe de commande 27 sur cette antenne numéro i et on l'actionne, ce qui permet la détection de l'organe de commande 27 et son association avec l'antenne numéro i.
- Puis pour associer logiquement une charge (par exemple un appareil électrique 25 pourvu d'une antenne secondaire 26 ou connecté à une telle antenne) à cet organe de commande 27, on pose cet appareil 25 sur une autre antenne primaire 13, notée antenne numéro k.
- L'unité de commande 3 qui gère le système détecte la variation de charge aux bornes de l'antenne primaire numéro k due à la présence de l'appareil 25, et associe logiquement l'organe de commande 27 à l'appareil 25, ce qui revient à associer logiquement en mémoire l'identifiant individuel de l'interrupteur 27, le numéro i de l'antenne primaire 13 couplée à l'interrupteur, le numéro k de l'antenne primaire 13 dans laquelle a été détectée la variation de charge due à l'appareil 25, et l'identifiant unique de l'appareil électrique 25.
- A partir de là, des appuis successifs sur l'organe de commande 27 activeront ou désactiveront l'antenne primaire numéro i et permettront d'activer ou de désactiver l'antenne primaire numéro k, et donc d'éteindre et d'allumer successivement l'appareil électrique 25.
- Le système est alors prêt pour envoyer à l'antenne primaire numéro k placée sous l'appareil électrique 25 une tension correspondant à l'usage prévu pour cet appareil.

Si l'usage prévu pour une antenne primaire est une action de chauffage par effet Joule, l'unité de commande 3 enverra une tension continue à cette antenne, correspondant à l'effet Joule recherché.

Si l'usage prévu pour une antenne primaire consiste à alimenter par induction un appareil 25 posé sur ladite antenne primaire, l'unité de commande 3 enverra à cette antenne une tension alternative apte à générer par induction dans l'antenne secondaire 26 de l'appareil 25 la tension d'alimentation nécessaire à l'appareil 25.

Si l'usage prévu pour une antenne primaire est à la fois un chauffage local et un échange de données par induction électromagnétique, l'unité de commande 3 enverra à cette antenne primaire par exemple une tension ayant une composante continue suffisante pour assurer le chauffage localisé, et une composante alternative à une fréquence compatible avec l'échange de données.

En fait, du point de vue d'un utilisateur du système, on réalise une association logique entre un organe de commande 27, un appareil électrique 25, et les antennes primaires 13 associées, et pour cela, du point de vue du système selon l'invention, on associe l'identifiant de l'étiquette RFID contenue dans l'organe de commande 27, les coordonnées de l'antenne primaire sur laquelle est positionné l'interrupteur, les coordonnées de l'antenne primaire sur laquelle est positionné l'appareil électrique, et l'identifiant unique de l'appareil électrique 25.

En particulier, cela rend possible le déplacement d'un organe de commande 27 sur une autre antenne primaire j du système, différente de l'antenne primaire i qui a servi à son association avec un appareil 25, et cet organe de commande 27 commandera alors la nouvelle antenne primaire j pour alimenter le même appareil en énergie ou pour échanger des données avec lui.

Cela est particulièrement pratique, puisqu'il sera possible de déplacer librement les organes de commande ou interrupteurs sur les parois d'une pièce équipée avec le système selon l'invention, tout en actionnant les appareils préalablement associés à ces organes de commande ou interrupteurs.

Mais cela rend également possible le déplacement dans le système d'un appareil d'une première antenne primaire vers une seconde antenne primaire tout en restant commandé par le même organe de commande 27. Pour cela on procède de la manière suivante :
1. État initial : un appareil 25 est alimenté en énergie par l'antenne primaire i via son antenne secondaire 26, et apparié à son organe de commande 27 comme décrit précédemment.
2. On retire l'appareil 25 de la proximité avec l'antenne primaire i.
3. L'unité de commande 3 du système mesure une différence de tension significative entre la valeur de la tension mesurée aux bornes de l'antenne primaire k avec une charge alimentée en énergie et la mesure de la tension aux bornes de l'antenne primaire i à vide alimentée en énergie.
4. Le système en déduit que l'on a retiré un appareil 25 et son antenne secondaire 26, du couplage avec l'antenne primaire i.
5. L'unité de commande 3 du système se met alors en mode détection de charge : elle envoie un faible signal pendant une durée prédéterminée à toutes les antennes primaires 13 qui sont à vide (c'est-à-dire n'alimentant aucun appareil) ou qui ne sont pas en mode chauffage.
6. On pose l'appareil 25 retiré de l'antenne primaire i sur une autre antenne primaire j parmi celles n'alimentant aucun appareil ou qui ne sont pas en mode chauffage.
7. L'unité de commande 3 mesure une différence de tension significative entre la valeur enregistrée au démarrage du système pour l'antenne primaire j à vide (absence de charge) et la tension obtenue après avoir posé la charge (l'appareil 25) sur l'antenne primaire j.
8. L'unité de commande 3 en déduit par conséquent que l'on a posé l'appareil 25 déplacé sur l'antenne primaire j et il alimente en conséquence l'antenne primaire j en énergie (ou en données le cas échéant), et uniquement cette antenne primaire j. L'appareil 25 déplacé est donc alimenté à sa nouvelle position.
9. Les coordonnées uniques de l'antenne primaire j remplacent celles de l'antenne primaire i et sont alors associées en mémoire à l'identifiant de l'étiquette RFID de l'organe de commande 27 préalablement associée avec l'antenne primaire i.
10. Des appuis successifs sur l'organe de commande 27 permettront d'éteindre et d'allumer successivement l'appareil 25 bien qu'il soit maintenant placé sur l'antenne primaire j.
11. Même si on déplace à son tour l'organe de commande 27 sur une autre antenne primaire du système, il commandera toujours la même antenne primaire j sur lequel est positionné l'appareil 25.

### AVANTAGES DE L'INVENTION

L'invention répond aux buts fixés et permet de réaliser à faible coût un système multifonction permettant à la fois de chauffer une surface ou un volume contigu à cette surface, mais également d'alimenter en électricité des équipements rapportés, tels que des lampadaires, appliques ou autres, et d'échanger des données avec eux, sans nécessiter de prise électrique à proximité de l'appareil à alimenter, ni de connexion filaire entre les appareils.

L'invention permet également l'ajout aisé de nouveaux composants dans le système, ou le déplacement aisé de dispositifs électriques existants, par exemple une applique murale ou des équipements domotiques, sans avoir à tirer des câbles électriques ni percer des orifices dans les cloisons.

L'invention fournit une solution particulièrement économique et élégante, puisqu'un même support facile à industrialiser à faible coût (l'antenne primaire 13) permet de fournir un ensemble de fonctions, notamment le chauffage, l'éclairage, la détection de présence, le balisage visuel et sonore, ou d'autres fonctions.

La solution peut aisément être déployée en intérieur (maison, bâtiments) ou en extérieur (voie publique, stades, ...) sur le sol, les murs ou les plafonds, mais également dans les véhicules individuels ou de transport en commun, les vêtements, ou tout autre support adapté.

Elle permet de transférer de l'énergie électrique et/ou thermique, et/ou des données, et/ou de l'éclairage depuis ou vers tout endroit de la surface équipée.

Le système selon l'invention est sûr car alimenté en basse tension, ce qui évite les risques d'électrocution. Les fréquences utilisées ne sont pas absorbées par l'homme, ce qui supprime les risques d'électro-sensibilité.

En outre, le système est économe en énergie, puisque seules les zones nécessaires sont alimentées.

Du point de vue d'un utilisateur final, le système selon l'invention présente aussi de nombreux avantages. Il permet d'obtenir une température maîtrisée et confortable en tout lieu d'une pièce, et ce sans dispositif de chauffage apparent. Il permet d'installer n'importe quel équipement de faible et moyenne puissance en tout endroit (sol, mur, plafond) d'une pièce équipée avec des lés de circuits d'antennes primaires 13, et ce de manière réversible et sans prises électriques ou interrupteurs fixes.

En mode transfert de données, le système selon l'invention permet le pilotage d'équipements domotiques tels que des volets roulants électriques, des dispositifs d'éclairage, ...) ou l'échange de données ou de commandes avec divers capteurs, interrupteurs, gradateurs, rhéostats, etc.

## Revendications

1. - Système multifonction de chauffage d'un support et de transfert d'énergie ou de données entre d'une part une pluralité d'antennes primaires (13) situées sur ledit support et pilotées par une unité de commande (3) susceptible de les alimenter en énergie électrique ou en données numériques, et d'autre part un ensemble d'appareils électriques (25) aptes à être alimentés en énergie électrique ou en données par couplage inductif entre les antennes primaires (13) et des antennes secondaires (26) connectées aux appareils électriques (25), **caractérisé en ce que** chaque appareil électrique (25) est associé à un identifiant numérique unique représentatif de son identité et d'un type d'appareil, et **en ce que** l'unité de commande (3) est configurée d'une part pour alimenter les antennes primaires (13) avec une tension électrique apte à provoquer leur échauffement par effet Joule, et d'autre part pour détecter et alimenter un appareil électrique (25) donné avec une tension électrique spécifique correspondant à un transfert d'énergie ou de données à cet appareil en fonction de son identifiant numérique.

2. - Système multifonction selon la revendication 1, **caractérisé en ce que** les antennes primaires (13) possèdent une adresse ou une identification unique dans l'unité de commande (3) de sorte que l'unité de commande (3) peut les alimenter individuellement et sélectivement avec une tension électrique correspondant à un chauffage par effet Joule, à un transfert d'énergie électrique par induction ou à un échange de données numériques avec un appareil électrique (25).

3. - Système multifonction selon la revendication 1 ou la revendication 2, **caractérisé en ce que** qu'il comporte une pluralité d'organes de commande ou interrupteurs (27) identifiés dans le système par un numéro individuel, de façon que l'identifiant unique de chaque appareil électrique (25) puisse être logiquement associé avec le numéro individuel d'au moins un organe de commande (27) susceptible de commander la mise en service ou hors service dudit appareil électrique (25) et avec l'adresse ou l'identification d'au moins une antenne primaire (13) du système.

4. - Système multifonction selon la revendication 3 , **caractérisé en ce que** l'identifiant numérique de chaque appareil électrique (25) et le numéro individuel de chaque organe de commande (27) sont mémorisés dans la mémoire d'une étiquette électronique RFID fixée sur chaque appareil électrique (25) et sur chaque organe de commande (27).

5. - Système multifonction selon l'une quelconque des revendications précédentes, **caractérisé en ce que** l'unité de commande (3) est configurée pour envoyer une tension continue aux antennes primaires (13) destinées à produire un effet de chauffage, et pour envoyer une tension ayant une composante continue et une composante alternative aux antennes primaires (13) destinées à produire à la fois un effet de chauffage et un effet d'alimentation en énergie ou de communication par induction électromagnétique avec un appareil (25).

6. - Système multifonction selon l'une quelconque des revendications précédentes, **caractérisé en ce que** l'unité de commande (3) est configurée pour détecter une variation de charge aux bornes d'une antenne primaire (13) lorsqu'un appareil électrique (25) est mis en service ou hors service dans le système au voisinage de ladite antenne primaire (13).

7. - Système multifonction selon la revendication 6, **caractérisé en ce que** l'unité de commande (3) est configurée pour détecter une variation de charge aux bornes d'une première antenne primaire (13) numéro i et d'une seconde antenne primaire (13) numéro j lorsqu'un appareil (25) est déplacé de l'antenne primaire numéro i vers l'antenne primaire numéro j.

8. - Système multifonction selon la revendication 7, **caractérisé en ce que** l'unité de commande (3) est configurée pour couper l'alimentation de la première antenne primaire (13) numéro i et pour alimenter la seconde antenne primaire (13) numéro j, par actionnement du même organe de commande (27) que celui qui alimentait la première antenne primaire (13) numéro i.

9. - Système multifonction selon l'une quelconque des revendications précédentes, **caractérisé en ce que** l'antenne secondaire (26) de l'appareil (25) et les antennes primaires (13) du dispositif sont configurées de manière que l'antenne secondaire (26) connectée à l'appareil (25) à alimenter embrasse le flux électromagnétique d'au moins une antenne primaire (13), quelle que soit la position de l'appareil (25) sur le support.

10. - Système multifonction selon l'une quelconque des revendications 3 à 9, **caractérisé en ce que** les organes de commande (27) sont des interrupteurs fixes ou mobiles.

11. - Système multifonction selon l'une quelconque des revendications précédentes, **caractérisé en ce qu'**il comporte une interface de communication (8) avec l'extérieur, configurée pour permettre la surveillance et le pilotage du système à partir d'un objet portable communicant, en particulier un téléphone portable ou une tablette électronique.

12. - Système multifonction selon la revendication 10 , **caractérisé en ce que** l'unité de commande (3) comporte un microprogramme configuré pour exécuter une procédure d'association logique entre un interrupteur (27) donné, et un appareil électrique (25) donné, comportant des étapes consistant à:
- pour un utilisateur, poser un interrupteur (27) libre, préalablement identifié par un numéro d'identification individuel, sur une antenne primaire(13) numéro i ;
- actionner l'interrupteur (27) de manière à activer l'étiquette RFID associée contenant l'identifiant individuel, et détecter l'identifiant individuel de l'interrupteur (27);
- pour le microprogramme de l'unité de commande (3), enregistrer l'identifiant individuel de l'interrupteur (27) dans une mémoire de l'unité de commande contenant une liste des interrupteurs utilisés dans le système ;
- envoyer à l'aide du microprogramme un signal de détection de charge à chaque antenne primaire (13) et enregistrer la valeur de la tension mesurée aux bornes de chaque antenne primaire (13) ;
- pour l'utilisateur, poser un appareil (25) connecté à une antenne secondaire (26), sur une autre antenne primaire (13) donnée, notée antenne numéro k;
- pour le microprogramme de l'unité de commande (3), détecter la variation de charge aux bornes de l'antenne primaire numéro k due à la présence de l'appareil électrique (25) et de l'antenne secondaire (26) ;
- pour le microprogramme de l'unité de commande (3), associer logiquement l'organe de commande (27) et l'appareil électrique (25), ce qui revient à associer en mémoire l'identifiant individuel de l'interrupteur, le numéro i de l'antenne primaire (13) couplée à l'interrupteur, le numéro k de l'antenne primaire (13) dans laquelle a été détectée la variation de charge due à l'appareil (25), et l'identifiant unique de l'appareil électrique (25).

13. - Système multifonction selon l'une quelconque des revendications précédentes, **caractérisé en ce que** lesdites antennes primaires (13) sont disposées sur des lés (21) destinés à la réalisation d'un revêtement d'un support tel qu'un sol, mur, ou équivalent, chaque lé (21) comprenant une couche diélectrique (20) revêtue de circuits électriques formant des antennes primaires (13) comportant une pluralité de spires métalliques conformées pour générer, simultanément ou sélectivement, lorsqu'elles sont parcourues par un courant électrique, un effet de chauffage par effet Joule et un effet électromagnétique apte à permettre un échange de données ou d'énergie par couplage électromagnétique avec une antenne secondaire (26) connectée à un appareil électrique (25).

14. - Système multifonction selon la revendication 13, **caractérisé en ce que** la couche diélectrique (20) est en PET, en PVC, en polycarbonate ou en polyuréthane.

15. - Système multifonction selon la revendication 13 ou la revendication 14, **caractérisé en ce que** les antennes primaires (13) comportent des pistes conductrices, en aluminium, cuivre, argent, ou encre conductrice.

16. - Système multifonction selon l'une quelconque des revendications précédentes, **caractérisé en ce que** les spires (23) des antennes primaires (13) ont une forme polygonale, hexagonale ou circulaire.

## Patentansprüche

1. Multifunktionssystem zum Heizen eines Trägers und zum Übertragen von Energie oder Daten zwischen zum einen einer Mehrzahl von Primärantennen (13), die auf dem Träger angeordnet sind und von einer Steuereinheit (3) angesteuert werden, die geeignet ist, sie mit elektrischer Energie oder mit digitalen Daten zu versorgen, und zum anderen einer Menge von Elektrogeräten (25), die geeignet sind, durch induktive Kopplung zwischen den Primärantennen (13) und Sekundärantennen (26), die an die Elektrogeräte (25) angeschlossen sind, mit elektrischer Energie oder Daten versorgt zu werden, **dadurch gekennzeichnet, dass** jedes Elektrogerät (25) einer einmaligen numerischen Kennung zugeordnet ist, die repräsentativ für seine Identität und für einen Gerätetyp ist, und dass die Steuereinheit (3) zum einen dazu ausgestaltet ist, die Primärantennen (13) mit einer elektrischen Spannung zu versorgen, die geeignet ist, durch Joule-Effekt ihre Erwärmung zu bewirken, und zum anderen dazu, ein gegebenes Elektrogerät (25) in Abhängigkeit von seiner numerischen Kennung zu detektieren und mit einer spezifischen elektrischen Spannung zu versorgen, die einer Übertragung von Energie oder von Daten zu diesem Gerät entspricht.

2. Multifunktionssystem nach Anspruch 1, **dadurch gekennzeichnet, dass** die Primärantennen (13) eine Adresse oder eine einmalige Kennzeichnung in der Steuereinheit (3) besitzen, so dass die Steuereinheit (3) sie individuell und selektiv mit einer elektrischen Spannung versorgen kann, die einem Heizen durch Joule-Effekt, einer Übertragung von elektrischer Energie durch Induktion oder einem Austausch von digitalen Daten mit einem Elektrogerät (25) entspricht.

3. Multifunktionssystem nach Anspruch 1 oder Anspruch 2, **dadurch gekennzeichnet, dass** es eine Mehrzahl von Steuereinrichtungen oder Schaltern (27) umfasst, die in dem System durch eine individuelle Nummer gekennzeichnet sind, so dass die einmalige Kennung jedes Elektrogeräts (25) der individuellen Nummer mindestens einer Steuereinrichtung (27), die geeignet ist, das Einschalten oder Ausschalten des Elektrogeräts (25) zu steuern, und der Adresse oder der Kennzeichnung mindestens einer Primärantenne (13) des Systems logisch zugeordnet werden kann.

4. Multifunktionssystem nach Anspruch 3, **dadurch gekennzeichnet, dass** die numerische Kennung jedes Elektrogeräts (25) und die individuelle Nummer jeder Steuereinrichtung (27) in dem Speicher eines elektronischen RFID-Etiketts gespeichert sind, das an jedem Elektrogerät (25) und an jeder Steuereinrichtung (27) befestigt ist.

5. Multifunktionssystem nach einem der vorhergehenden Ansprüche, **dadurch gekennzeichnet, dass** die Steuereinheit (3) dazu ausgestaltet ist, eine Gleichspannung an die Primärantennen (13) zu senden, die dazu bestimmt sind, einen Heizeffekt zu bewirken, und eine Spannung mit einer Gleichspannungskomponente und einer Wechselspannungskomponente an die Primärantennen (13) zu senden, die dazu bestimmt sind, sowohl einen Heizeffekt als auch einen Energieversorgungs- oder Kommunikationseffekt durch elektromagnetische Induktion mit einem Gerät (25) zu bewirken.

6. Multifunktionssystem nach einem der vorhergehenden Ansprüche, **dadurch gekennzeichnet, dass** die Steuereinheit (3) dazu ausgestaltet ist, eine Laständerung an den Klemmen einer Primärantenne (13) zu detektieren, wenn ein Elektrogerät (25) in dem System in der Nähe der Primärantenne (13) ein- oder ausgeschaltet wird.

7. Multifunktionssystem nach Anspruch 6, **dadurch gekennzeichnet, dass** die Steuereinheit (3) dazu ausgestaltet ist, eine Laständerung an den Klemmen einer ersten Primärantenne (13) Nummer i und einer zweiten Primärantenne (13) Nummer j zu detektieren, wenn ein Gerät (25) von der Primärantenne Nummer i zur Primärantenne Nummer j bewegt wird.

8. Multifunktionssystem nach Anspruch 7, **dadurch gekennzeichnet, dass** die Steuereinheit (3) dazu ausgestaltet ist, die Versorgung der ersten Primärantenne (13) Nummer i zu unterbrechen und die zweite Primärantenne (13) Nummer j zu versorgen, durch Betätigen derselben Steuereinrichtung (27) wie derjenigen, die die erste Primärantenne (13) Nummer i versorgt hat.

9. Multifunktionssystem nach einem der vorhergehenden Ansprüche, **dadurch gekennzeichnet, dass** die Sekundärantenne (26) des Geräts (25) und die Primärantennen (13) der Vorrichtung so ausgestaltet sind, dass die an das zu versorgende Gerät (25) angeschlossene Sekundärantenne (26), unabhängig von der Position des Geräts (25) auf dem Träger, den elektromagnetischen Fluss mindestens einer Primärantenne (13) umschlingt.

10. System nach einem der Ansprüche 3 bis 9, **dadurch gekennzeichnet, dass** die Steuereinrichtungen (27) feststehende oder bewegliche Schalter sind.

11. Multifunktionssystem nach einem der vorhergehenden Ansprüche, **dadurch gekennzeichnet, dass** es eine Kommunikationsschnittstelle (8) zur Außenumgebung umfasst, die dazu ausgestaltet ist, die Überwachung und die Ansteuerung des Systems ausgehend von einem kommunizierenden tragbaren Objekt, insbesondere einem Mobiltelefon oder einem Tablet, zu ermöglichen.

12. Multifunktionssystem nach Anspruch 10, **dadurch gekennzeichnet, dass** die Steuereinheit (3) eine Firmware umfasst, die dazu ausgestaltet ist, ein Verfahren zur logischen Zuordnung zwischen einem gegebenen Schalter (27) und einem gegebenen Elektrogerät (25) auszuführen, das Schritte umfasst, die darin bestehen:
- für einen Benutzer, einen freien Schalter (27), der zuvor durch eine individuelle Identifikationsnummer gekennzeichnet wurde, auf eine Primärantenne (13) Nummer i zu legen;
- den Schalter (27) zu betätigen, so dass das zugeordnete RFID-Etikett, das die individuelle Kennung enthält, aktiviert wird und die individuelle Kennung des Schalters (27) detektiert wird;
- für die Firmware der Steuereinheit (3), die individuelle Kennung des Schalters (27) in einem Speicher der Steuereinheit, der eine Liste der im System verwendeten Schalter enthält, zu registrieren;
- mithilfe der Firmware ein Lastdetektionssignal an jede Primärantenne (13) zu senden und den Wert der Spannung, die an den Klemmen jeder Primärantenne (13) gemessen wird, zu registrieren;
- für den Benutzer, ein Gerät (25), das an eine Sekundärantenne (26) angeschlossen ist, auf eine andere gegebene Primärantenne (13), die als Antenne Nummer k bezeichnet wird, zu legen;
- für die Firmware der Steuereinheit (3), die Laständerung an den Klemmen der Primärantenne Nummer k, die durch das Vorhandensein des Elektrogeräts (25) und der Sekundärantenne (26) bedingt ist, zu detektieren;
- für die Firmware der Steuereinheit (3), die Steuereinrichtung (27) und das Elektrogerät (25) logisch zuzuordnen, was darauf hinausläuft, im Speicher die individuelle Kennung des Schalters, die Nummer i der Primärantenne (13), die mit dem Schalter gekoppelt ist, die Nummer k der Primärantenne (13), in der die Laständerung detektiert wurde, die durch das Gerät (25) bedingt ist, und die einmalige Kennung des Elektrogeräts (25) zuzuordnen.

13. Multifunktionssystem nach einem der vorhergehenden Ansprüche, **dadurch gekennzeichnet, dass** die Primärantennen (13) auf Bahnen (21) angeordnet sind, die zur Herstellung eines Belags eines Trägers wie eines Bodens, einer Wand o. ä. bestimmt sind, wobei jede Bahn (21) eine dielektrische Schicht (20) umfasst, die mit Schaltkreisen überzogen ist, die Primärantennen (13) bilden, die eine Mehrzahl von metallischen Windungen umfassen, die dazu ausgebildet sind, gleichzeitig oder selektiv, wenn sie von einem elektrischen Strom durchflossen werden, einen Heizeffekt durch Joule-Effekt und einen elektromagnetischen Effekt zu erzeugen, der geeignet ist, einen Daten- oder Energieaustausch durch elektromagnetische Kopplung mit einer Sekundärantenne (26), die an ein Elektrogerät (25) angeschlossen ist, zu ermöglichen.

14. Multifunktionssystem nach Anspruch 13, **dadurch gekennzeichnet, dass** die dielektrische Schicht (20) aus PET, aus PVC, aus Polycarbonat oder aus Polyurethan ist.

15. Multifunktionssystem nach Anspruch 13 oder Anspruch 14, **dadurch gekennzeichnet, dass** die Primärantennen (13) Leiterbahnen aus Aluminium, Kupfer, Silber oder leitfähiger Tinte umfassen.

16. Multifunktionssystem nach einem der vorhergehenden Ansprüche, **dadurch gekennzeichnet, dass** die Windungen (23) der Primärantennen (13) eine vieleckige, sechseckige oder kreisrunde Form haben.

## Claims

1. Multifunction system for heating a medium and for transferring energy or data between on the one hand a plurality of primary antennas (13) located on said medium and controlled by a control unit (3) capable of supplying them with electrical energy or digital data, and on the other hand a set of electrical appliances (25) able to be supplied with electrical energy or data via inductive coupling between the primary antennas (13) and secondary antennas (26) connected to the electrical appliances (25), **characterized in that** each electrical appliance (25) is associated with a unique numerical identifier representative of its identity and of a type of appliance, and **in that** the control unit (3) is configured on the one had to supply the primary antennas (13) with a voltage able to cause them to heat through Joule heating, and on the other hand to detect and supply a given electrical appliance (25) with a specific voltage corresponding to a transfer of energy or of data to this appliance depending on its numerical identifier.

2. Multifunction system according to Claim 1, **characterized in that** the primary antennas (13) possess a unique identification or address in the control unit (3) so that the control unit (3) is able to supply them individually and selectively with a voltage corresponding to Joule heating, to a transfer of electrical energy via induction or to an exchange of digital data with an electrical appliance (25).

3. Multifunction system according to Claim 1 or Claim 2, **characterized in that** it comprises a plurality of control members or switches (27) identified in the system by an individual number, so that the unique identifier of each electrical appliance (25) may be logically associated with the individual number of at least one control member (27) capable of turning on or turning off said electrical appliance (25) and with the address or identification of at least one primary antenna (13) of the system.

4. Multifunction system according to Claim 3, **characterized in that** the numerical identifier of each electrical appliance (25) and the individual number of each control member (27) are stored in the memory of an RFID electronic tag fastened to each electrical appliance (25) and to each control member (27).

5. Multifunction system according to any one of the preceding claims, **characterized in that** the control unit (3) is configured to send a DC voltage to the primary antennas (13) intended to produce a heating effect, and to send a voltage having a DC component and an AC component to the primary antennas (13) intended to produce both a heating effect and an effect resulting in supply of energy to or in communication via electromagnetic induction with an appliance (25).

6. Multifunction system according to any one of the preceding claims, **characterized in that** the control unit (3) is configured to detect a variation in load across the terminals of a primary antenna (13) when an electrical appliance (25) is turned on or off in the system in the vicinity of said primary antenna (13).

7. Multifunction system according to Claim 6, **characterized in that** the control unit (3) is configured to detect a variation in load across the terminals of a first primary antenna (13) number i and of a second primary antenna (13) number j when an appliance (25) is moved from primary antenna number i to primary antenna number j.

8. Multifunction system according to Claim 7, **characterized in that** the control unit (3) is configured to not supply the first primary antenna (13) number i and to instead supply the second primary antenna (13) number j, on actuation of the very same control member (27) that used to supply the first primary antenna (13) number i.

9. Multifunction system according to any one of the preceding claims, **characterized in that** the secondary antenna (26) of the appliance (25) and the primary antennas (13) of the device are configured so that the secondary antenna (26) connected to the appliance (25) to be supplied couples to the electromagnetic flux of at least one primary antenna (13), whatever the position of the appliance (25) on the medium.

10. Multifunction system according to any one of Claims 3 to 9, **characterized in that** the control members (27) are fixed or moveable switches.

11. Multifunction system according to any one of the preceding claims, **characterized in that** it comprises an interface (8) for communication with the exterior, said interface being configured to allow the system to be monitored and controlled from a portable communicating object, in particular a mobile telephone or a tablet computer.

12. Multifunction system according to Claim 10, **characterized in that** the control unit (3) comprises a microprogram configured to execute a procedure allowing logical association between a given switch (27) and a given electrical appliance (25), comprising steps of:
- a user placing a free switch (27) identified beforehand by an individual identification number on a primary antenna (13) number i;
- actuating the switch (27) so as to activate the associated RFID tag containing the individual identifier, and detecting the individual identifier of the switch (27);
- the microprogram of the control unit (3) storing the individual identifier of the switch (27) in a memory of the control unit containing a list of the switches used in the system;
- sending, using the microprogram, a load-detection signal to each primary antenna (13) and storing the value of the voltage measured across the terminals of each primary antenna (13);
- the user placing an appliance (25) connected to a secondary antenna (26) on another given primary antenna (13) denoted antenna number k;
- the microprogram of the control unit (3) detecting the variation in load across the terminals of primary antenna number k due to the presence of the electrical appliance (25) and of the secondary antenna (26);
- the microprogram of the control unit (3) logically associating the control member (27) and the electrical appliance (25), this amounting to associating in memory the individual identifier of the switch, the number i of the primary antenna (13) coupled to the switch, the number k of the primary antenna (13) for which the variation in load due to the appliance (25) was detected, and the unique identifier of the electrical appliance (25).

13. Multifunction system according to any one of the preceding claims, **characterized in that** said primary antennas (13) are placed on strips (21) intended to produce a coating on a medium such as a floor, wall, or equivalent, each strip (21) comprising a dielectric layer (20) coated with electrical circuits forming primary antennas (13) comprising a plurality of metal turns shaped to generate, simultaneously or selectively, when they are passed through by an electrical current, Joule heating and an electromagnetic effect able to allow an exchange of data or of energy via electromagnetic coupling with a secondary antenna (26) connected to an electrical appliance (25).

14. Multifunction system according to Claim 13, **characterized in that** the dielectric layer (20) is made of PET, of PVC, of polycarbonate or of polyurethane.

15. Multifunction system according to Claim 13 or Claim 14, **characterized in that** the primary antennas (13) comprise conductive tracks made of aluminium, copper, silver, or conductive ink.

16. Multifunction system according to any one of the preceding claims, **characterized in that** the turns (23) of the primary antennas (13) have a polygonal, hexagonal or circular shape.
